# EUROPÄISCHE PATENTSCHRIFT

(11) **EP 0 810 322 B1**
(45) Veröffentlichungstag und Bekanntmachung des Hinweises auf die Patenterteilung: **18.12.2002**
(21) Anmeldenummer: 97108099.9
(22) Anmeldetag: 20.05.1997
(51) Int. Cl.: D21H 17/54, C08G 69/48, C08J 5/18, C08G 73/02

(54) **Verfahren zur Herstellung von Retentions- und Entwässerungsmittel auf Basis von Polyaminoethern**
Process for preparing retention and dewatering agents on the basis of polyaminoethers
Procédé pour la préparation d'agents de rétention et de déshydratation à partir de polyaminoéthers

(30) Priorität: 30.05.1996 DE 19621697
(43) Veröffentlichungstag der Anmeldung: 03.12.1997
(73) Patentinhaber: WOLFF WALSRODE AG, 29655 Walsrode (DE)
(72) Erfinder: Bayer, Roland, Dr., 29683 Fallingbostel (DE); Koch, Wolfgang, Dr., 29699 Bomlitz (DE); Szablikowski, Klaus, Dr., 29664 Walsrode (DE)
(74) Vertreter: Pettrich, Klaus-Günter, Dr.

(56) Entgegenhaltungen:
- EP-A- 0 000 714
- WO-A-92/01729
- DE-A- 2 162 567
- DE-A- 2 916 356

## Beschreibung

Die vorliegende Erfindung betrifft ein Verfahren zur Herstellung eines vernetzten polymeren Produktes, das durch Tempern von chlorhydrinhaltigen Polyaminoethern unter alkalischen Bedingungen entsteht. Das erhaltene Produkt eignet sich als Papierhilfsmittel, insbesondere als Retentions- und Entwässerungsmittel.

Bekannt ist die Herstellung von Polyaminoethern aus Polyethylenglykol oder anderen Glykolen durch Umsetzung mit zwei Äquivalenten Epichlorhydrin unter katalytischen Bedingungen, z.B. durch BF₃-Katalyse, vgl. EP-PS-0 000 714, Beispiel 1a, Teilprodukt A; DE-OS-21 62 567. Bei der Reaktion zwischen Glykol bzw. Polyethylenglykol und zwei Äquivalenten Epichlorhydrin entsteht zunächst ein (Poly-)ethylenglykoldichlorhydrinether, der anschließend unter Zugabe von Wasser mit einem Diamin umgesetzt wird. Dabei entsteht durch nukleophile Substitution ein Polyaddukt. Dieses Polyaddukt ist aufgrund seiner kationischen Ladungen grundsätzlich dazu in der Lage, als Retentions- und Entwässerungsmittel in der Papierherstellung oder bei der Aufarbeitung von Abwässern und Klärschlämmen eingesetzt zu werden. In der Praxis zeigt sich jedoch, daß die so erhaltenen Polyaminoether sehr schlechte Retentions- und Entwässerungsleistungen zeigen. Eine der Ursachen hierfür ist, daß die erhaltenen Produkte im allgemeinen zu geringe Molmassen besitzen.

Aufgabe der vorliegenden Erfindung war deshalb die Entwicklung eines Retentions- und Entwässerungsmittels auf Basis von Polyaminoethern, das wesentlich bessere Retentions- und Entwässerungswerte zeigt als die nach Stand der Technik bekannten Systeme.

Gegenstand der Erfindung sind daher verzweigte und/oder vernetzte Polyaminoether, gemäβ Anspruch 6 und ein Verfahren zur Herstellung dieser Polyaminoether gemäß Anspruch 1. Polyaminoether, die auf diese Weise hergestellt werden, zeigen eine deutlich höhere Entwässerungsleistung als solche, die nach dem Stand der Technik hergestellt werden.

Zur Durchführung des erfindungsgemäßen Verfahrens des alkalischen Vernetzens von Polyaminoethern geht man im allgemeinen wie folgt vor: Die Herstellung der Polyaminoether wird so modifiziert, daß das erhaltene Produkt noch genügend freie Chlorhydringruppen enthält, die sich unter alkalischen Bedingungen in der Wärme zur Vernetzung nutzen lassen. Dies erfordert einen stöchiometrischen Unterschuß an primären Aminogruppen im Vergleich zu den kettenendständigen Chlorhydrin-, bzw. Epoxidgruppen. Geeignet sind molare Verhältnisse von Chlorhydrin-/Epoxidgruppen zur primären Aminogruppen von 1 : 0,999 bis 1 : 0,7, insbesondere von 1 : 0,999 bis 1 : 0,8. Als Amine eignen sich Diethylentriamin, Triethylentetramin, Tetraethylenpentamin, höhere Ethylenpolyamine, Dipropylentriamin, Tripropylentriamin, höhere Propylenpolyamine, Polyvinylamin und Vinylamin enthaltende Copolymere, Propfcopolymere und Blockcopolymere, Polyallylamin und Allylamin enthaltende Copolymere, Pfropfcopolymere und Blockcopolymere, Polyethylenimin und Ethylenimin enthaltende Copolymere, Pfropfcopolymere und Blockcopolymere sowie Mischungen der vorgenannten Substanzen.

Im allgemeinen führt man die erfindungsgemäße Verneztung so durch, daß der chlorhydrinhaltige Polyaminoether in Lösung in einer Konzentration von 5 - 50 %, insbesondere von 10 - 25 % vorgelegt wird. Anschließend wird die Lösung auf 50 - 150°C erwärmt und mit einer Base, insbesondere KOH oder NaOH auf pH 8 - 13 eingestellt. Die Lösung kann auch zuerst alkalisch gestellt und dann durch Aufheizen vernetzt werden. Die Base kann als wäßrige oder alkoholische Lösung oder in Festform zugegeben werden, bevorzugt ist jedoch die wäßrige Lösung.

Als Lösungsmittel zur Durchführung der Vernetzung sind alle wäßrig-organischen Lösungsmittelsysteme geeignet, die eines oder mehrere der folgenden Lösungsmittel enthalten: Wasser, Alkohole, Ketone, Ether, Ester und Amide, bevorzugt sind Wasser, C₁ - C₄-Alkohle, C₁ - C₄-Ketone sowie C₁ - C₄-Amide, ganz bevorzugt ist Wasser. Geeignet zur Vernetzung sind Bedingungen (in wäßriger Lösung) von pH 8 - 13, insbesondere von pH 9 - 11 und Temperaturen zwischen 50 und 150 °C, insbesondere von 60 - 90 °C.

Das alkalische Tempern der Lösung ist mit einem Viskositätsanstieg verbunden. Hat die Lösung die gewünschte Viskosität erreicht, kann sie mit Säure, insbesondere Ameisensäure oder Essigsäure, auf den gewünschten pH eingestellt werden. Dies ist vor allem dann erforderlich, wenn sich noch Chlorhydringruppen in Lösung befinden. Das erhaltene Endprodukt weist im allgemeinen eine Viskosität von 15 - 100 sec Durchlaufzeit in 4-mm-Durchlaufbecher (nach DIN 53211) auf. Das hergestellte Produkt eignet sich u. a. als Retentions- und Entwässerungsmittel, kationisches Fixiermittel, Naßfestmittel sowie als Flockungsmittel. Das erfindungsgemäße Verfahren führt zu einem Produkt mit gegenüber der nicht behandelten Ausgangsprobe deutlich erhöhter Entwässerungsleistung.

### Beispiele

### Beispiel 1

### Herstellung von Polyaminoethern

In einem 1-l-Dreihalskolben mit Rührer, Thermometer und Tropftrichter werden 390,0 g Polyethylenglykol 400 und 1,3 g Bortrifluorid-Dihydrat vorgelegt. Nach Aufheizen auf 64 °C beginnt man unter Rühren im Verlauf von 90 - 120 min 180,1 g 98%iges Epichlorhydrin zuzutropfen.

Dabei hält man die Temperatur der exothermen Reaktion zwischen 65 und 70 °C. Nach Beendigung des Zutropfens rührt man noch 1 h nach. Dann läßt man 85,1 g Diethylentriamin über einen Verlauf von 60 min zutropfen und hält die Temperatur. Über eine Kolonne destilliert man das in einer Nebenreaktion entstandene Dioxan ab. Nach Abdestillieren von 369,71 g dioxanhaltigen Wassers erhält man eine Lösung mit einer Konzentration von 63,2 %.

### Beispiel 2

Die Reaktion wird wie in Beispiel 1 geführt. Anstelle von 85,1 g Diethylentriamin gibt man 270,6 g Polyamin C (Bayer AG, Leverkusen) zu. Es wird weiter wie unter Beispiel 1 beschrieben, verfahren.

### Beispiel 3

### Vernetzung von Polyaminoethern

In einem 2-1-Reaktionsgefäß mit Planschliffdeckel, Heizmantel, Rührer, Thermometer, Rückflußkühler und pH-Sonde werden 602,56 g eines 75%igen Polyaminoethers nach Beispiel 1 und 2192,5 g destilliertes Wasser vorgelegt. Nach Aufheizen auf 70 °C werden unter Rühren innerhalb von ca. 90 sec 57,42 g 50%ige NaOH-Lösung zugegeben. Während des weiteren Rührens steigt die Viskosität an, bis nach ca. 4 h ein Maximalwert erreicht ist. Danach wird die Reaktion mit 85%iger Ameisensäure auf pH 7,0 eingestellt und abgekühlt. Man erhält ein Produkt mit einem Festkörpergehalt von 16,1 % und einer Durchlaufzeit (4-mm-DIN-53211-Becher) von 85 sec.

### Entwässerungsversuche mit dem Schopper-Riegler-Mahlgradprüfer

Die nachfolgende Tabelle zeigt die erreichten Entwässerungsverbesserungen für Einsatzmengen von 0,1; 0,2 und 0,3 % Entwässerungsmittel. Dabei bedeuten die Konzentrationsangaben von 0,1/0,2/0,3: 1/2/3 ml einer Entwässerungsmittellösung pro 1 kg Papierpulpe, wobei die Entwässerungsmittellösung 0,2 g Feststoff Entwässerungsmittel als Lösung, z. B. 1 g einer 20%igen Lösung von Entwässerungsmittel, verdünnt mit Wasser auf 500 ml Lösung, enthält. Papiersystem, Altpapier, Walsroder Zeitung, Leitungswasser (30° C), Einsatzmenge: 60 g einer 5%igen Papierpulpe, verdünnt mit Wasser auf 1000 g.

| **Probe** | **Entwässerungsverbesserung bei Einsatz einer Konzentration von** | | |
|---|---|---|---|
| | **0,1 %** | **0,2 %** | **0,3 %** |
| Polyaminoether nach Beispiel 1 (= Stand der Technik) | 5 % | 10 % | 14 % |
| Polyaminoether nach Beispiel 3 und 10 min Tempern | 13,5 % | 22 % | 27,5 % |
| Polyaminoether nach Beispiel 3 und 30 min Tempern | 24,5 % | 33,5 % | 41 % |
| Polyaminoether nach Beispiel 3 und 60 min Tempern | 29 % | 38 % | 46 % |
| Polyaminoether nach Beispiel 3 und 120 min Tempern | 31 % | 42 % | 49 % |
| Polyaminoether nach Beispiel 3 und 180 min Tempern | 32,5 % | 46 % | 53 % |

## Patentansprüche

1. Verfahren zur Herstellung von verzweigten und/oder vernetzten Polyaminoethern, durch
a) Umsetzung von Glykoldichlorhydrinen oder Polyglykoldichlorhydrinen und Aminen aus der Reihe Diethylentriamin, Triethylentetramin, Tetraethylenpentamin, höhere Ethylenpolyamine, Dipropylentriamin, Tripropylentriamin, höhere Propylenpolyamine, Polyvinylamin und Vinylamin enthaltende Copolymere, Pfropfcopolymere und Blockcopolymere, Polyallylamin und Allylamin enthaltende Copolymere, Pfropfcopolymere und Blockcopolymere, Polyethylenimin und Ethylenimin enthaltende Copolymere, Pfropfcopolymere und Blockcopolymere sowie Mischungen der vorgenannten Substanzen, wobei das Verhältnis von Chlorhydringruppen zu primären Aminogruppen 1:0,999 bis 1:0,7 beträgt und
b) Vernetzung der Reaktionsprodukte in Wasser oder in einem wässrigorganischen Lösungsmittelsystem unter alkalischen Bedingungen bei einer Temperatur von 50 bis 150°C.

2. Verfahren nach Anspruch 1, **dadurch gekennzeichnet, dass** als Glykole der Glykoldichlorhydrine Ethylenglykol, Propylenglykol, Polyethylenglykole und Polypropylenglykole eingesetzt werden.

3. Verfahren nach wenigstens einem der Ansprüche 1 bis 2, **dadurch gekennzeichnet, dass** das wässrig-organische Lösungsmittelsystem eines oder mehrere organische Lösungsmittel aus der Reihe Alkohole, Ketone, Ether, Ester und Amide enthält.

4. Verfahren nach wenigstens einem der Ansprüche 1 bis 3, **dadurch gekennzeichnet, dass** die Vernetzung in Wasser stattfindet.

5. Verfahren nach wenigstens einem der Ansprüche 1 bis 4, **dadurch gekennzeichnet, dass** die Konzentration des Reaktionsproduktes aus a) bei der Vernetzung b) in Lösung 5 bis 50 % beträgt.

6. Polyaminoether, erhältlich durch
a) Umsetzung von Glykoldichlorhydrinen oder Polyglykoldichlorhydrinen und Aminen aus der Reihe Diethylentriamin, Triethylentetramin, Tetraethylenpentamin, höhere Ethylenpolyamine, Dipropylentriamin, Tripropylentriamin, höhere Propylenpolyamine, Polyvinylamin und Vinylamin enthaltende Copolymere, Pfropfcopolymere und Blockcopolymere, Polyallylamin und Allylamin enthaltende Copolymere, Propfcopolymere und Blockcopolymere, Polyethylenimin und Ethylenimin enthaltende Copolymere, Pfropfcopolymere und Blockcopolymere sowie Mischungen der vorgenannten Substanzen, wobei das Verhältnis von Chlorhydringruppen zu primären Aminogruppen 1:0,999 bis 1:0,07 beträgt, und
b) Vernetzung der Reaktionsprodukte in Wasser oder in einem wässrigorganischen Lösungsmittelsystem unter alkalischen Bedingungen bei Temperaturen von 50 bis 150°C.

7. Verwendung der Polyaminoether nach Anspruch 6 als Retentions- und Entwässerungsmittel, Fixiermittel, Nassfestmittel oder Flockungsmittel.

## Claims

1. Process for preparing branched and/or crosslinked polyamino-ethers by
a) reaction of glycol dichlorohydrins or polyglycol dichlorohydrins and amines selected from the group consisting of diethylenetriamine, triethylenetetramine, tetraethylenepentamine, higher ethylenepolyamines, dipropylenetriamine, tripropylenetriamine, higher propylenepolyamines, polyvinylamine and vinylamine-containing copolymers, graft copolymers and block copolymers, polyallylamine and allylamine-containing copolymers, graft copolymers and block copolymers, polyethyleneimine and ethyleneimine-containing copolymers, graft copolymers and block copolymers and also mixtures thereof, the ratio of chlorohydrin groups to primary amino groups being in the range from 1:0.999 to 1:0.7, and
b) crosslinking of the reaction products in water or in an aqueous organic solvent system under alkaline conditions at a temperature of 50 to 150°C.

2. Process according to Claim 1, **characterized in that** ethylene glycol, propylene glycol, polyethylene glycols or polypropylene glycols are employed as glycols of glycol dichlorohydrins.

3. Process according to at least one of Claims 1 to 2, **characterized in that** the aqueous organic solvent system contains one or more organic solvents selected from the group consisting of alcohols, ketones, ethers, esters and amides.

4. Process according to at least one of Claims 1 to 3, **characterized in that** the crosslinking takes place in water.

5. Process according to at least one of Claims 1 to 4, **characterized in that** the concentration of the reaction product of a) in the crosslinking b) in solution is 5 to 50%.

6. Polyamino-ethers obtainable by
a) reaction of glycol dichlorohydrins or polyglycol dichlorohydrins and amines selected from the group consisting of diethylenetriamine, triethylenetetramine, tetraethylenepentamine, higher ethylenepolyamines, dipropylenetriamine, tripropylenetriamine, higher propylenepolyamines, polyvinylamine and vinylamine-containing copolymers, graft copolymers and block copolymers, polyallylamine and allylamine-containing copolymers, graft copolymers and block copolymers, polyethyleneimine and ethyleneimine-containing copolymers, graft copolymers and block copolymers and also mixtures thereof, the ratio of chlorohydrin groups to primary amino groups being in the range from 1:0.999 to 1:0.07, and
b) crosslinking of the reaction products in water or in an aqueous organic solvent system under alkaline conditions at temperatures of 50 to 150°C.

7. Use of the polyamino-ethers according to Claim 6 as a retention and dewatering agent, fixing agent, wet-strength agent or flocculating agent.

## Revendications

1. Procédé pour la préparation de polyaminoéthers ramifiés et/ou réticulés par
a) réaction de dichlorhydrines de glycols ou de dichlorhydrines de polyglycols et d'amines choisies parmi la diéthylènetriamine, la triéthylènetétramine, la tétraéthylènepentamine, les éthylènepolyamines supérieures, la dipropylènetriamine, la tripropylènetriamine, les propylènepolyamines supérieures, la polyvinylamine et les copolymères, copolymères greffés et copolymères séquencés contenant de la vinylamine, la polyallylamine et les copolymères, copolymères greffés et copolymères séquencés contenant de l'allylamine, la polyéthylèneimine et les copolymères, copolymères greffés et copolymères séquencés contenant de l'éthylèneimine et les mélanges de ces substances, avec un rapport de 1:0,999 à 1:0,07 entre les groupes chlorhydrine et les groupes amino primaires et
b) réticulation du produit de réaction dans l'eau ou dans un système solvant hydro-organique en milieu alcalin à une température de 50 à 150°C.

2. Procédé selon la revendication 1, **caractérisé en ce que** les glycols des dichlorhydrines de glycols sont l'éthylèneglycol, le propylèneglycol, des polyéthylèneglycols et des polypropylèneglycols.

3. Procédé selon au moins une des revendications 1 à 2, **caractérisé en ce que** le système solvant hydro-organique contient un ou plusieurs solvants organiques choisis parmi les alcools, les cétones, les éthers, les esters et les amides.

4. Procédé selon au moins une des revendications 1 à 3, **caractérisé en ce que** la réticulation est réalisée dans l'eau.

5. Procédé selon au moins une des revendications 1 à 4, **caractérisé en ce que** la concentration du produit de réaction obtenu en a) dans la solution mise en oeuvre à la réticulation b) est de 5 à 50 %.

6. Polyaminoéthers obtenus par
a) réaction de dichlorhydrines de glycols ou de dichlorhydrines de polyglycols et d'amines choisies parmi la diéthylènetriamine, la triéthylènetétramine, la tétraéthylènepentamine, les éthylènepolyamines supérieures, la dipropylènetriamine, la tripropylènetriamine, les propylènepolyamines supérieures, la polyvinylamine et les copolymères, copolymères greffés et copolymères séquencés contenant de la vinylamine, la polyallylamine et les copolymères, copolymères greffés et copolymères séquencés contenant de l'allylamine, la polyéthylèneimine et les copolymères, copolymères greffés et copolymères séquencés contenant de l'éthylèneimine, et les mélanges de ces substances, à un rapport de 1:0,999 à 1:0,07 entre les groupes chlorhydrine et les groupes amino primaires et
b) réticulation du produit de réaction dans l'eau ou dans un système solvant hydro-organique en milieu alcalin à des températures de 50 à 150°C.

7. Utilisation des polyaminoéthers selon la revendication 6 en tant qu'agents de rétention et de déshydratation, fixateurs, agents conférant la résistance au mouillé ou agents floculants.
